# EUROPÄISCHE PATENTANMELDUNG

(11) **EP 4 474 342 A1**
(43) Veröffentlichungstag der Anmeldung: **11.12.2024**
(21) Anmeldenummer: 23020279.8
(22) Anmeldetag: 06.06.2023
(51) Int. Cl.: C01B 3/04, B01D 53/047, C01B 3/50, F02C 3/22, C01B 3/56

(54) **VERFAHREN UND ANLAGE ZUR GEWINNUNG EINES WASSERSTOFFS ENTHALTENDEN PRODUKTS**

(71) Anmelder: Linde GmbH, 82049 Pullach (DE)
(72) Erfinder: Reinke, Michael, 82049 Pullach (DE); Peschel, Andreas, 82049 Pullach (DE); Kormakov, Sergei, 82049 Pullach (DE)
(74) Vertreter: Fischer, Werner

(57) **Zusammenfassung**

Es wird ein Verfahren (100) zur Herstellung eines wasserstoffhaltigen Produkts vorgeschlagen, wobei Ammoniak in einem Ammoniakcracker (20), dem Wärme zugeführt wird, unter Erhalt eines nicht umgewandeltes Ammoniak sowie Wasserstoff und Stickstoff enthaltenden Rohgases (3, 4) teilweise umgesetzt wird. Hierbei ist vorgesehen, dass ein Teil des Rohgases (3, 4) zur Bereitstellung eines Anteils der Wärme verfeuert wird. Eine entsprechende Anlage (100) ist ebenfalls Gegenstand der Erfindung.

## Beschreibung

Die Erfindung betrifft ein Verfahren und eine Anlage zur Gewinnung eines Wasserstoff enthaltenden Produkts.

### Hintergrund der Erfindung

Ammoniak kann bekanntermaßen katalytisch zu Stickstoff und Wasserstoff zerlegt werden. Man spricht dabei auch von Ammoniakcracken. Die Reaktion von Ammoniak zu Stickstoff und Wasserstoff ist endotherm und wird durch niedrigen Druck und hohe Temperatur begünstigt. Um einen Wasserstoffverdichter zu vermeiden, sind dennoch höhere Drücke wünschenswert.

Die Hauptreaktionsprodukte Wasserstoff und Stickstoff können in einem Gemisch als Produkt bereitgestellt werden, oder es kann eine Aufreinigung des Wasserstoffs erfolgen. Ein Wasserstoff-Stickstoff-Gemisch wird dabei auch als Formiergas bezeichnet. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen können, wird also Wasserstoff aus Ammoniak gewonnen. Eine "Gewinnung eines Wasserstoff enthaltenden Produkts" im hier verstandenen Sinn schließt also die Gewinnung eines wasserstoffhaltigen Gasgemischs, weiterer Produkte wie Stickstoff und/oder die anschließende Nutzung nicht aus.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Dampfreformers umfassen, der eine Druckwechseladsorption zur Wasserstoffreinigung zugeordnet ist. Beispielsweise sei in diesem Zusammenhang auf die EP 4 112 539 A1 und die EP 4 112 540 A1 verwiesen, deren Inhalt hier in vollem Umfang aufgenommen wird.

Ein Ammoniakcracker kann einen Feuerraum, in dem mit Katalysatormaterial gefüllte Reaktionsrohre angeordnet sind, sowie ein Abhitzesystem aufweisen. Der Feuerraum kann durch einen oder mehrere mit importiertem Brennstoff betriebene Brenner beheizt werden, die Energie für die endotherm ablaufende Spaltung des durch die Reaktionsrohre geführten Ammoniaks liefern.

In entsprechenden Konzepten kann der Wasserstoff mittels der Druckwechseladsorption von einem Restgas abgetrennt werden, wobei das Restgas zur Unterfeuerung des Ammoniakcrackers verwendet werden kann. Zusätzliche Feuerungsleistung kann durch die Verbrennung von reinem Ammoniak bereitgestellt werden. Entsprechende Konzepte eignen sich insbesondere für die Herstellung von Wasserstoff hoher Reinheit. In entsprechenden Verfahren können insbesondere nickelbasierte Katalysatoren bei erhöhten Temperaturen von ca. 800 °C zur Ammoniakspaltung verwendet werden.

Die vorliegende Erfindung stellt sich die Aufgabe, entsprechende Verfahren und Anlagen zur Gewinnung eines Wasserstoffprodukts unter Verwendung von Ammoniak zu verbessern und insbesondere effizienter zu gestalten.

### Offenbarung der Erfindung

Vor diesem Hintergrund werden ein Verfahren und eine Anlage zur Gewinnung eines wasserstoffhaltigen Produkts mit den Merkmalen der unabhängigen Patentansprüche vorgeschlagen. Ausgestaltungen sind Gegenstand der abhängigen Patentansprüche und der nachfolgenden Beschreibung.

Die vorliegende Erfindung adressiert das Problem, dass die direkte Verbrennung von flüssigem oder verdampftem Ammoniak hinsichtlich des Brenneigenschaften mehrere Nachteile mit sich bringt, wie insbesondere die niedrige Flammengeschwindigkeit, die bei den vorherrschenden Temperaturen zur Bildung erhöhter Mengen von Stickstoffoxiden (vor allem den sogenannten Brennstoff-Stickoxiden) führen kann.

Die vorliegende Erfindung beruht nun auf der Erkenntnis, dass gegenüber der Verfeuerung von frisch eingesetztem Ammoniak, also eines reinen oder im Wesentlichen reinen Ammoniakstroms, eine Verfeuerung von gecracktem Ammoniak, d.h. eines "Anteils" des dem Ammoniakcracker entnommenen Rohgases, der insbesondere stromauf einer Druckwechseladsorption abgezweigt wird, vorteilhaft ist.

Ein "Anteil" des Rohgases kann dabei ein (lediglich) durch Aufteilen des Rohgases gebildeter Teilstrom, also eine Teilmenge mit denselben Gehalten an Komponenten wie das Rohgas, sein, ein "Anteil" kann aber auch eine Fraktion sein, die in einer Gastrennung wie einer Druckwechseladsorption gebildet wird. Auch Kombinationen von "Anteilen" können vorgesehen sein.

Ein derartiger Anteil kann einen gewissen Anteil Ammoniak aufweisen, der in dem Ammoniakcracker nicht umgesetzt wurde. Die Hauptbestandteile des Rohgases sind allerdings Wasserstoff und Stickstoff. Die erfindungsgemäß vorgeschlagene Lösung ist insoweit kontraintuitiv, als hierbei ein Teil des aufwendig erzeugten Rohgases mit dem darin enthaltenen Wasserstoff verfeuert wird. Allerdings überwiegen unerwarteterweise in den Ausgestaltungen der Erfindung die sich aus einer derartigen Verfeuerung ergebenden Vorteile.

In anderen Worten umfasst das vorgeschlagene Verfahren zur Herstellung eines Wasserstoff enthaltenden Produkts, dass Ammoniak in einem Ammoniakcracker, dem Wärme zugeführt wird, unter Erhalt eines nicht umgewandeltes Ammoniak sowie Wasserstoff und Stickstoff enthaltenden Rohgases teilweise umgesetzt wird. Nachfolgend soll dabei unter dem "Ammoniak", das in dem Verfahren eingesetzt wird, stets auch sogenanntes technisches Ammoniak (engl. Anhydrous Ammonia) verstanden werden, dass bis zu 0,5 Gewichtsprozent Wasser enthalten kann. Derartiges technisches Ammoniak wird weltweit in Tankschiffen und mittels Pipelines transportiert und kann daher in großen Mengen zur Verfügung gestellt werden.

Das vorgeschlagene Verfahren umfasst ferner, dass ein Teil des Rohgases zur Bereitstellung eines Anteils der dem Ammoniakcracker zugeführten Wärme verfeuert wird. Unterschiedliche Ausgestaltungen werden nachfolgend erläutert.

In einer Ausgestaltung wird das Rohgas oder ein Anteil hiervon unter Erhalt einer gegenüber dem Rohgas an Wasserstoff und Stickstoff angereicherten und an Ammoniak abgereicherten Produktfraktion und eines gegenüber dem Rohgas an Wasserstoff und Stickstoff abgereicherten und an Ammoniak angereicherten Restgases einer Druckwechseladsorption unterworfen. Eine derartige Ausgestaltung kann insbesondere dann zum Einsatz kommen, wenn das Wasserstoff enthaltende Produkt im Wesentlichen Wasserstoff ist. Wenn als Produkt Formiergas bereitgestellt werden soll, ist eine entsprechende Druckwechseladsorption nicht erforderlich. Hierbei müssen lediglich im Wesentlichen Wasser und Ammoniak abgeschieden werden. An beliebiger Stelle kann dabei ein Gasstrom abgezweigt und für die Beheizung verwendet werden.

Die Produktfraktion kann in Ausgestaltungen mit Druckwechseladsorption insbesondere zu mehr als 75%, 80%, 90%, 95%, 98%, 99%, 99,5% oder 99,9% aus Wasserstoff bestehen und entsprechend 0,1 bis 25% an anderen Gaskomponenten aufweisen. Das Restgas kann insbesondere 0 bis 10% Ammoniak aufweisen und ansonsten Stickstoff und Wasserstoff und ggf. auch Wasser, falls technisches Ammoniak eingesetzt wird.

In einer entsprechenden Ausgestaltung mit Druckwechseladsorption kann der Teil des Rohgases, der zur Bereitstellung eines ersten Anteils der dem Ammoniakcracker zugeführten Wärme verfeuert wird, das Restgas (5) oder einen Teil hiervon und/oder die Produktfraktion (6) oder einen Teil hiervon umfassen. Beliebige Kombinationen sind dabei in entsprechenden Ausgestaltungen möglich.

Ferner kann in entsprechenden Ausgestaltungen auch nur ein erster Teil des Rohgases der Druckwechseladsorption unterworfen werden. Der Teil des Rohgases, der zur Bereitstellung eines ersten Anteils der dem Ammoniakcracker zugeführten Wärme verfeuert wird, kann dabei einen zweiten Teil des Rohgases umfassen, der in solchen Ausgestaltungen verfeuert wird, ohne der Druckwechseladsorption unterworfen zu werden.

Die im Rahmen des vorgeschlagenen Verfahrens verwendete Druckwechseladsorption kann in jeglicher, aus dem Stand der Technik bekannter Weise durchgeführt werden, wobei die Produktfraktion in der Druckwechseladsorption auf einem Druckniveau gebildet wird, das dem Einspeisedruck in die Druckwechseladsorption entsprechen oder geringfügig darunter liegen kann, d.h. dass die Produktfraktion in der Druckwechseladsorption im Adsorptionstakt eines oder mehrerer Adsorberbehälter gebildet wird, wobei insbesondere Wasserstoff eine nicht adsorbierende Komponente darstellt. Das Restgas stellt dagegen die bei geringerem Druck im Desorptionstakt gebildete Gasmischung mit den zuvor adsorbierten Komponenten dar.

In Ausgestaltungen der vorliegenden Erfindung kann der Ammoniakcracker mit einer Reaktoraustrittstemperatur von 400 bis 1000 °C, insbesondere mit einer Reaktoraustrittstemperatur von 550 bis 850 °C, betrieben werden. Der Ammoniakcracker kann ferner auf einem Reaktionsdruck von 1 bis 70 bar Absolutdruck, insbesondere von 20 bis 50 bar Absolutdruck betrieben werden.

Entsprechende Reaktionsdrücke sind besonders vorteilhaft, damit der erzeugte Wasserstoff ohne oder mit nur geringem Verdichtungsaufwand als Produkt abgegeben werden kann. Die Erzielung entsprechender Reaktionsdrücke ist umso einfacher möglich, als der Druck des eingesetzten, gewöhnlich flüssig vorliegenden Ammoniaks mit wenig Energieaufwand erhöht werden kann. Damit unter diesen Bedingungen ein ausreichend hoher, wirtschaftlich sinnvoller Umsetzungsgrad des eingesetzten Ammoniaks erreicht wird, werden vorteilhafterweise die angegebenen Reaktionstemperaturen bzw. Reaktoraustrittstemperaturen verwendet.

Im Rahmen der vorliegenden Erfindung kann insbesondere vorgesehen sein, dass der Ammoniakcracker ohne Dampfzugabe zu einem dem Ammoniakcracker zugeführten Ammoniakeinsatzes betrieben wird. Auf diese Weise kann der Wassergehalt in dem Rohgas und der damit verbundene Trennaufwand reduziert werden. Ferner reduzieren sich durch den Verzicht auf ein separates Dampfsystem die Erstellungskosten einer entsprechenden Anlage.

In Ausgestaltungen der Erfindung kann der Ammoniakcracker mit einer Rauchgasrückführung betrieben werden. Dieser kann dabei insbesondere, wie bereits eingangs erläutert, nach Art eines Dampfreformers ausgestaltet sein und einen Ofenraum aufweisen, innerhalb dessen die Rauchgasrückführung bzw. Rauchgasrezirkulation realisiert wird. Auf diese Weise kann die Temperatur des Rauchgases beim Austritt aus der Strahlungszone, unter entsprechender Reduzierung anderenfalls auftretender Wärmeverluste, auf einen Wert von ca. 150 bis 200 K oberhalb der Reaktoraustrittstemperatur reduziert werden. Auf diese Weise können in entsprechenden Ausgestaltungen der vorliegenden Erfindung auch andere Vorteile, wie eine Verringerung der Bildung von Stickstoffoxiden, realisiert werden.

In bestimmten Ausgestaltungen des hier vorgeschlagenen Verfahrens kann Wärme des Rohgases oder eines Teils hiervon mittels eines Wärmeübertragers auf den Ammoniakeinsatz oder einen Teil hiervon übertragen werden. Es kann also ein sogenannter Feed-Effluent-Wärmeübertrager verwendet werden. Die Wärmeübertragung kann in Ausgestaltungen der Erfindung für eine Überhitzung des Ammoniakeinsatzes und/oder für eine Verdampfung des Ammoniakeinsatzes verwendet werden. In diesen oder weiteren Ausgestaltungen des hier vorgeschlagenen Verfahrens kann bei der Verbrennung gebildetes Rauchgas für eine Verbrennungsluftvorwärmung und/oder eine Erwärmung des Ammoniakeinsatzes eingesetzt werden.

Die Wärme des heißen Rohgases bzw. Spaltgases kann also insbesondere unter Verwendung eines entsprechenden Feed-Effluent-Wärmeübertragers zurückgewonnen werden, um das eingespeiste Ammoniak auf eine Temperatur zu überhitzen, die z.B. 50 K unter der des heißen Rohgases liegt. Für den Hochtemperaturbetrieb bis 1000°C kann das Spaltgas in einem gasbeheizten Ammoniakcracker verwendet werden. Die Restwärme des Prozessgases kann z.B. zum Verdampfen des eingespeisten Ammoniaks genutzt werden. Zusätzlich kann eine Luftvorwärmung mit heißem Rauchgas eingesetzt werden, um die Rauchgasaustrittstemperatur des Kamins auf 70 bis 150°C zu senken. Auch eine Brennstoffvorwärmung kann eingesetzt werden. Eine Kondensation des Rauchgases ist vorteilhafterweise zu vermeiden. Auch eine Auslegung mit einem gasbeheizten Reformer ist möglich.

Ausgestaltungen der vorliegenden Erfindung können auch umfassen, dass die Produktfraktion oder ein Teil hiervon einer Gasturbine als Brennstoff zugeführt wird.

In einer Ausgestaltung der Erfindung kann auch ein Inbetriebnahmemodus vorgesehen sein, in dem ein weiterer Brennstoff zur Bereitstellung der Wärme oder eines Teils hiervon verwendet wird und/oder das Rohgas zu einem Einlass des Ammoniakcrackers zurückgeführt wird und/oder mittels eines elektrisch beheizten Ammoniakcrackers unter Erhalt eines weiteren Rohgases umgesetzt wird, von dem zumindest ein Teil zur Bereitstellung der Wärme oder eines Teils hiervon verfeuert wird. Somit kann eine Inbetriebnahme erfolgen, ohne dass die später verwendeten Brennstoffe bereits verfügbar sind.

Eine vorgeschlagene Anlage zur Herstellung eines Wasserstoff enthaltenden Produkts mit einem Ammoniakcracker ist dafür eingerichtet, Ammoniak in dem Ammoniakcracker unter Erhalt eines nicht umgesetztes Ammoniak sowie Wasserstoff und Stickstoff enthaltenden Rohgases teilweise umzusetzen.

Die Anlage ist dafür eingerichtet, einen Teil des Rohgases zur Bereitstellung eines Anteils der dem Ammoniakcracker zugeführten Wärme zu verfeuern.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung unter Erläuterung des technischen Hintergrunds beschrieben.

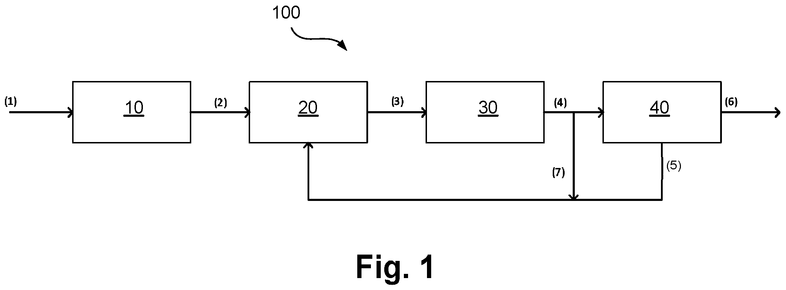

Figur 1 veranschaulicht ein Verfahren bzw. eine Anlage gemäß einer Ausführungsform der vorliegenden Erfindung.

### Ausführungsformen der Erfindung

Die nachfolgend beschriebenen Ausführungsformen werden zu dem Zweck behandelt, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie von den unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

In Figur 1 ist ein Verfahren bzw. eine Anlage gemäß einer Ausgestaltung der vorliegenden Erfindung veranschaulicht und insgesamt mit 100 bezeichnet.

In der hier veranschaulichten Ausgestaltung wird ein Ammoniakeinsatz 1, beispielsweise aus einem Tank, falls erforderlich mittels mit einer Pumpe unter Druck gesetzt und in einer Vorbehandlungseinheit 10 verdampft und überhitzt. Das verdampfte und überhitzte Ammoniak 2 wird einem Ammoniakcracker 20 zugeführt. Ein dem Ammoniakcracker entnommenes Rohgas bzw. Spaltgas 3 enthält in der Regel eine gewisse Menge an nicht umgewandeltem Ammoniak, da das thermodynamische Gleichgewicht die Umwandlung bei hoher Temperatur und niedrigem Druck begünstigt, die Umwandlung unter technisch relevanten Bedingungen jedoch bei erhöhtem Druck und begrenzter Temperatur vorgenommen wird.

Nach einer Wärmeintegration 30 liegt das Rohgas 3 als abgekühltes Rohgas 4 vor. Nicht umgewandeltes Ammoniak wird mittels einer Druckwechseladsorption 40 in einem Stoffstrom 5 zurückgewonnen, wobei es sich bei dem Stoffstrom 5 um ein Restgas der Druckwechseladsorption 40 handelt. In der Druckwechseladsorption 40 wird ferner eine Produktfraktion 6 gewonnen, die, in der vorliegenden spezifischen Ausgestaltung, hauptsächlich Wasserstoff und Spuren von Stickstoff enthält. Wasser kann optional mit dem Ammoniak abgetrennt werden und Teil des Stoffstroms 5 sein. Wasser kann in "wasserfreiem" Ammoniak technischer Qualität enthalten sein.

Das Restgas der Druckwechseladsorption 40, d.h. der Stoffstrom 5, wird in dieser Ausführungsform in einem oder mehreren Brennern des Ammoniakcrackers 20 als Energiequelle verwendet. Alternativ ist auch die Verwendung in einem externen befeuerten Heizer (nicht dargestellt) möglich. Die Differenz des Wärmebedarfs für die endotherme Reaktion des Ammoniakcrackers 20 wird durch die Verbrennung eines Teils des Rohgases 7 gedeckt.

## Patentansprüche

1. Verfahren (100) zur Herstellung eines Wasserstoff enthaltenden Produkts, wobei Ammoniak in einem Ammoniakcracker (20), dem Wärme zugeführt wird, unter Erhalt eines nicht umgewandeltes Ammoniak sowie Wasserstoff und Stickstoff enthaltenden Rohgases (3, 4) teilweise umgesetzt wird, **dadurch gekennzeichnet, dass** ein Teil des Rohgases (3, 4) zur Bereitstellung eines Anteils der dem Ammoniakcracker (20) zugeführten Wärme verfeuert wird.

2. Verfahren (100) nach Anspruch 1, bei dem das Rohgas (3, 4) oder ein Teil hiervon unter Erhalt einer gegenüber dem Rohgas (3, 4) an Wasserstoff und Stickstoff angereicherten und an Ammoniak abgereicherten Produktfraktion (6) und eines gegenüber dem Rohgas (3, 4) an Wasserstoff und Stickstoff abgereicherten und an Ammoniak angereicherten Restgases (5) einer Druckwechseladsorption (40) unterworfen wird.

3. Verfahren (100) nach Anspruch 2, bei dem der Teil des Rohgases (3, 4), der zur Bereitstellung eines ersten Anteils der dem Ammoniakcracker (20) zugeführten Wärme verfeuert wird, das Restgas (5) oder einen Teil hiervon und/oder die Produktfraktion (6) oder einen Teil hiervon umfasst.

4. Verfahren (100) nach Anspruch 2 oder 3, bei dem nur ein erster Teil des Rohgases der Druckwechseladsorption (40) unterworfen wird, wobei der Teil des Rohgases (3, 4), der zur Bereitstellung eines ersten Anteils der dem Ammoniakcracker (20) zugeführten Wärme verfeuert wird, einen zweiten Teil des Rohgases (3, 4) umfasst, der verfeuert wird, ohne der Druckwechseladsorption (40) unterworfen zu werden.

5. Verfahren (100) nach einem der vorstehenden Ansprüche, wobei der Ammoniakcracker (20) mit einer Reaktoraustrittstemperatur von 400 bis 1000 °C, insbesondere mit einer Reaktoraustrittstemperatur von 550 bis 850 °C, betrieben wird.

6. Verfahren (100) nach einem der vorstehenden Ansprüche, wobei der Ammoniakcracker (20) auf einem Reaktionsdruck von 1 bis 70 bar Absolutdruck, insbesondere von 20 bis 50 bar Absolutdruck betrieben wird.

7. Verfahren (100) nach einem der vorstehenden Ansprüche, wobei der Ammoniakcracker (20) ohne Dampfzugabe zu einem dem Ammoniakcracker (20) zugeführten Ammoniakeinsatzes (1) betrieben wird.

8. Verfahren (100) nach einem der vorstehenden Ansprüche, wobei der Ammoniakcracker (20) mit einer Rauchgasrückführung betrieben wird.

9. Verfahren (100) nach einem der vorstehenden Ansprüche, wobei Wärme des Rohgases (3, 4) oder eines Teils hiervon mittels eines Wärmeübertragers auf den Ammoniakeinsatz (1) oder einen Teil hiervon übertragen wird.

10. Verfahren (100) nach Anspruch 6, bei dem die Wärmeübertragung für eine Überhitzung des Ammoniakeinsatzes (1) und/oder für eine Verdampfung des Ammoniakeinsatzes (1) verwendet wird.

11. Verfahren (100) nach einem der vorstehenden Ansprüche, bei dem bei der Verbrennung gebildetes Rauchgas für eine Verbrennungsluftvorwärmung und/oder eine Erwärmung des Ammoniakeinsatzes (1) verwendet wird.

12. Verfahren (100) nach einem der vorstehenden Ansprüche, bei dem die Produktfraktion (6) oder ein Teil hiervon einer Gasturbine als Brennstoff zugeführt wird.

13. Verfahren (100) nach einem der vorstehenden Ansprüche, das einen Inbetriebnahmemodus umfasst, in dem ein weiterer Brennstoff zur Bereitstellung der Wärme oder eines Teils hiervon verwendet wird und/oder das Rohgas zu einem Einlass des Ammoniakcrackers (20) zurückgeführt wird und/oder mittels eines elektrisch beheizten Ammoniakcrackers unter Erhalt eines weiteren Rohgases umgesetzt wird, von dem zumindest ein Teil zur Bereitstellung der Wärme oder eines Teils hiervon verfeuert wird.

14. Anlage (100) zur Herstellung eines Wasserstoff enthaltenden Produkts, wobei die Anlage dafür eingerichtet ist, Ammoniak in einem Ammoniakcracker (20) unter Erhalt eines nicht umgesetzten Ammoniaks sowie Wasserstoff und Stickstoff enthaltenden Rohgases (3, 4) teilweise umzusetzen, **dadurch gekennzeichnet, dass** die Anlage (100) dafür eingerichtet ist, einen Teil des Rohgases (3, 4) zur Bereitstellung eines Anteils der dem Ammoniakcracker (20) zugeführten Wärme zu verfeuern.

15. Anlage (100) nach Anspruch 14, die zur Durchführung eines Verfahrens (100) nach einem der Ansprüche 1 bis 13 eingerichtet ist.
